# EUROPEAN PATENT APPLICATION

(11) **EP 4 115 745 A1**
(43) Date of publication of application: **11.01.2023**
(21) Application number: 21185684.4
(22) Date of filing: 14.07.2021
(51) Int. Cl.: A23L 15/00, A23L 29/00, A23L 29/10, A23L 29/269, A23L 33/115, A23L 33/15, A23L 33/16, A23L 33/165, A23L 33/18, A23L 33/21

(54) **EGG SUBSTITUTE AND METHOD OF MANUFACTURE**

(30) Priority: 07.07.2021 US 202117369930; 07.07.2021 CA 3123907
(71) Applicant: Nabati Foods Inc., Edmonton, Alberta T5L 4V5 (CA)
(72) Inventor: Yehya, Ahmad, St Albert, T8N 2L1 (CA); Carriere, Kristyn, Edmonton, T5K 0Z7 (CA); Bzeih, Rim, Edmonton, T5Z 0E4 (CA)
(74) Representative: Lawrie IP Limited

(57) **Abstract**

A liquid egg analog has a composition comprising water, lupin protein, pea protein, oil, high acyl and low acyl gellan gum, tetrasodium pyrophosphate, isomaltooligosaccharide, acidulant, and divalent cations of magnesium and calcium. A method of preparing the liquid egg analog combines water, lupin protein and pea protein to produce a protein mix, combines water and gellan gums to produce a gel mix, and combines the protein mix and gel mix with the remaining ingredients to produce a combined mixture. The combined mixture may then be pasteurized, cooled and bottled.

## Description

### TECHNICAL FIELD

Egg substitutes and methods of manufacturing the same, particularly plant-based egg substitutes.

### BACKGROUND

Eggs, especially chicken eggs, are a popularly consumed food around the world. Chickens and other egg-laying creatures are raised around the world to produce eggs. The mass production of chicken eggs is extensive, with the world production of chicken eggs in 2017 estimated at 80.1 million tonnes. Eggs are occasionally eaten raw but are frequently cooked into a wide variety of meals and food products.

Chicken eggs are valued in part for their nutritional content and also for their culinary properties. In cooking, eggs are frequently used as an emulsifier and as a thickener. In baking, eggs can add structure and leavening to cakes and cookies.

Chicken eggs are also associated with some negative health concerns. Eggs are significant sources of dietary cholesterol, which has been associated with negative outcomes in some studies. Eggs have also faced issues of contamination by pathogenic bacteria such as salmonella enteritidis. Many people have ethical concerns with the methods of poultry farming used to meet global demand. Some may avoid eggs as part of a vegetarian or vegan diet.

There is demand for egg analogs having nutritional and culinary properties resembling those of chicken eggs but substantially lacking animal-derived ingredients.

### SUMMARY

A significant goal in the development of egg substitutes is to produce a composition that replicates as many properties of a conventional egg as possible. An enduring problem is that it is difficult to produce a fluid that has an egg-like flowing consistency before it is cooked and that gels into a solid like that of a conventional egg when cooked at conventional cooking temperatures, while also replicating other desirable properties (e.g. taste, nutritional benefits). The compositions and methods described herein provide a solution in which gellants comprising high acyl gellan gum and low acyl gellan gum are incorporated into the composition along with cross-linking agents and a fructose, glucose or sucrose derivative and other ingredients in a manner by which the cross-linking agents are partially sequestered and the gelling temperatures of the gellan gums are shifted upwards. These effects, separately and in combination, help produce a liquid egg substitute that can be prepared and pasteurized while maintaining a flowing consistency, but cooks into a gel that resembles a conventional egg and reproduces other desirable properties of eggs including both taste and protein content.

A liquid egg analog is provided, the liquid egg analog comprising: a dispersant, an emulsifier, a plant protein, high acyl gellan gum, low acyl gellan gum, texturizing agents and a glucose, fructose or sucrose derivative.

In various embodiments, there may be included any one or more of the following features: the liquid egg analog comprises an acidulant; the plant protein comprises lupin protein; the plant protein comprises pea protein; the glucose, fructose or sucrose derivative comprises isomaltooligosaccharide; the liquid egg analog comprises transglutaminase; the liquid egg analog comprises a sodium phosphate or a potassium phosphate; the sodium phosphate or potassium phosphate is selected from the group consisting of tetrasodium pyrophosphate (TSPP), disodium phosphate (DSP) and sodium hexametaphosphate (SHMP); the texturizing agents comprising one or more divalent cation salts; the one or more divalent cation salts comprise a magnesium salt; the magnesium salt comprises magnesium lactate; the one or more divalent cation salts comprise a calcium salt.

In some embodiments, the liquid egg composition may comprise a sodium phosphate or potassium phosphate in amounts of up to 1% of the total weight of the composition. In a preferred embodiment, sodium phosphate or potassium phosphate are incorporated in an amount of approximately 0.85% of the total weight of the composition.

There is also provided a liquid egg analog comprising a dispersant, an emulsifier, lupin protein extract, pea protein extract, high acyl gellan gum, low acyl gellan gum and texturizing agents.

In various embodiments, there may be included any one or more of the following features: the lupin protein extract and the pea protein extract together comprise between 10% and 15% of a total weight of the liquid egg analog; and the combined weight of high acyl gellan gum and low acyl gellan gum is between 6% and 8.5% of the combined weight of lupin protein extract and pea protein extract. The lupin protein extract and pea protein extract may together comprise more than 95% of the protein content of the liquid egg analog by total weight. In other embodiments, lupin protein extract and pea protein extract may be the only sources of protein in the liquid egg analog.

There is also provided a plant-based egg substitute comprising an emulsifier, lupin protein extract, pea protein extract, high acyl gellan gum, low acyl gellan gum, and texturizing agents.

There is provided a method of preparing a liquid egg analog, the method comprising forming a protein mixture by dosing proteins, a first texturizing agent and an emulsifier into a dispersant; forming a gel mixture by combining a gel composition comprising high acyl gellan gum and low acyl gellan gum into a dispersant; combining the gel mixture with the protein mixture to form a combined mixture; and pasteurizing the combined mixture.

In various embodiments, the method may include any one or more of the following features: pasteurizing the combined mixture occurs at a temperature less than or equal to 65°C for a period of less than 10 minutes while agitating the mixture under low shear; the steps of forming a protein mixture, forming a gel mixture, and combining the gel mixture with the protein mixture all occur at temperatures less than or equal to 55°C; the first texturizing agent comprises a divalent cation salt; dosing oil and fortifiers into the combined mixture; dosing a gel composition comprising high acyl gellan gum and low acyl gellan gum into a dispersant to form a gel mixture comprises dosing a glucose, fructose or sucrose derivative into the dispersant; the glucose, fructose or sucrose derivative comprises isomaltooligosaccharide.

These and other aspects of the composition and method are set out in the claims.

### BRIEF DESCRIPTION OF THE FIGURES

Embodiments will now be described with reference to the figures, in which like reference characters denote like elements, by way of example, and in which:
Fig. 1 is a flow chart showing a method of preparing a liquid egg analog according to an embodiment.
Fig. 2 is a flow chart showing a method of preparing a liquid egg analog according to another embodiment.
Fig. 3 is a flow chart showing a method of preparing a liquid egg analog according to yet another embodiment.

### DETAILED DESCRIPTION

Immaterial modifications may be made to the embodiments described here without departing from what is covered by the claims.

A liquid egg analog - which may be equivalently referred to as an egg substitute - is a composition with properties resembling that of a conventional egg product. In this description, the "dry weight" refers to the weight of the composition before the introduction of added water. Some amount of water may be naturally present in ingredients before the introduction of added water.

While the composition is generally referred to as a "liquid egg analog", in some embodiments the composition may be produced and provided as a dry substance, e.g., a powder. A powdered egg analog - equivalently, powdered egg substitute - can be hydrated with a suitable dispersant such as water and/or oils.

Some embodiments may be referred to as a plant-based liquid egg analog. In this description, plant-based is taken to mean that the ingredients in that composition are mostly or entirely made of plant-based foods and not derived from animals. This may mean that ingredients in the composition have non-living sources (e.g., some salts) or living sources that are not animals (e.g., plants, fungi, algae, etc.).

An exemplary liquid egg analog comprises at least a dispersant, a protein, high acyl gellan gum, low acyl gellan gum and an emulsifier. Various additional ingredients may also be included such as additional dispersants, additional proteins, additional hydrocolloids, buffering agents, preservatives, texturizing agents including cation salts, fortifiers, additional emulsifiers, colorants and flavor enhancers. Individual ingredients may fit more than one category. For example, calcium carbonate may be included and serve as a texturizing agent (cation salt) and as a fortifier.

In most embodiments, the largest dispersant by weight is water. In some embodiments, other fluids with approximately neutral pH may be incorporated in place of water or in combination with water. In some preferred embodiments, oil is incorporated as an additional dispersant. An exemplary oil may be sunflower oil, but other oils that are liquid at room temperature may be used. The oils used as dispersants may comprise primarily mono- and poly-unsaturated fatty acids. In some embodiments, water comprises between 70% and 85% of the total weight of a liquid egg analog. In a preferred embodiment, water comprises approximately 75% of the total weight of the liquid egg analog. In some embodiments, oils comprise between 5%-10%of the total weight of the liquid egg analog or approximately 20% - 40% of the total weight of the liquid egg analog. In some embodiments, oils such as sunflower oil comprise between 6.5% and 7.0% of the total weight of a liquid analog. In a preferred embodiment, sunflower oil comprises approximately 7.3% of the total weight of a liquid egg analog.

The liquid egg analog may comprise approximately 12% proteins by total weight. In most embodiments, proteins comprise plant proteins such as isolates from grains, legumes, and beans. In a preferred embodiment, the proteins comprise lupin and pea protein isolates. In an embodiment, the lupin protein comprises between 5% and 15% of the total weight of the composition. In a preferred embodiment, the lupin protein comprises between 9.5% and 11% of the total weight of the liquid egg analog or between 38% and 44% of the dry weight of the liquid egg analog. In an embodiment, pea protein comprises between 0%-5% of the total weight of the liquid egg analog. In a preferred embodiment, pea protein comprises between 1.75% and 2.75% of the total weight of the liquid egg analog or between 7% and 11% of the dry weight of the liquid egg analog. The lupin protein extract and pea protein extract may together comprise more than 95% of the protein content of the liquid egg analog by total weight. In other embodiments, lupin protein extract and pea protein extract may be the only sources of protein in the liquid egg analog.

Some non-limiting examples of other candidate plant proteins comprise isolates derived from: vegetables and legumes such as spinach, brussels sprouts, beans, including garbanzo beans, fava beans, pinto beans, kidney beans, lima beans, soy beans, and lentils; seeds such as chia seeds; grains such as corn, rice, wheat, quinoa, amaranth, buckwheat, millet; tubers and roots such as potatoes and sweet potatoes; fruits such as tomatoes, cranberries, pumpkins; hemp; nuts such as almond, cashew, and pistachio; algae such as chlorella and spirulina; and seaweed. In general, approximately 10-15% of the total weight of the liquid egg analog may comprise proteins including plant proteins.

In liquid egg analogs various ingredients interact to produce desired properties including food texture. Texture may encompass the viscosity, creaminess, pulpiness and overall mouthfeel of the product. Ingredients that can contribute to the texture of a product can include starches, hydrocolloids and emulsifiers. In many embodiments of a liquid egg analog, a goal may be to produce a product with a shelf-stable, flowing consistency at room temperature and at conventional refrigeration temperatures which, when cooked, forms gel structures that approximate the general structure and properties of cooked eggs. A flowing consistency refers to the fluid having a sufficiently low viscosity that it is pourable at a moderate rate. For example, a liquid egg analog with a flowing consistency may have a viscosity of up to 250 cP and preferably less than 150 cP. In some embodiments of a liquid egg analog, ingredients that may provide these properties include the plant proteins, hydrocolloids, buffers, polysaccharides and oligosaccharides, emulsifiers, cation salts, and other texturizing agents like transglutaminase.

Buffering agents such as TSPP and potassium citrate can assist in maintaining an approximately neutral (7.0) pH. In an exemplary embodiment, TSPP and potassium citrate are incorporated in amounts of approximately 3.50% and 0.62% of the dry weight of the composition, respectively, or approximately 0.85% and 0.15% of the total composition, respectively. In some embodiments, potassium citrate is incorporated in amounts of up to 0.5% of the total weight of the composition. Some alternatives to TSPP may comprise other sodium phosphates or potassium phosphates including disodium phosphate (DSP) and sodium hexametaphosphate (SHMP). In some embodiments, the liquid egg composition may comprise a sodium phosphate or potassium phosphate in amounts of up to 1% of the total weight of the composition. In a preferred embodiment, TSPP is incorporated in an amount of approximately 0.55% of the total weight of the composition. Potassium citrate also functions as a cation salt. Alternatives to potassium citrate may include other monovalent or divalent cation salts.

Cation salts, such as potassium citrate, salt (e.g., Kosher salt) magnesium lactate, and calcium carbonate interact with other ingredients including the proteins and hydrocolloids to develop gel structures. The interaction of cation salts with the hydrocolloids and to a lesser degree, the proteins, develops gel structures that give the composition some of the desired texture. Divalent cation salts, such as Ca2+ and Mg2+ tend to react strongly with hydrocolloids to produce strong gel structures. In some embodiments, the divalent cation salts and/or monovalent cation salts are mixed in with other ingredients so as to limit the initial reactivity of the divalent cation salts - and monovalent cation salts, as applicable - with the hydrocolloids. These steps may include sequestering the cations with buffers in the system, reacting the hydrocolloids with other ingredients, and reacting cations with other ingredients such as the proteins. In some embodiments, magnesium lactate, and kosher salt are incorporated in amounts of up to 0.5% of the total weight of the composition. In some embodiments, calcium carbonate is incorporated in amounts of up to 0.2% of the total weight of the composition. In some embodiments, magnesium lactate is incorporated in amounts between 0.08% and 0.12% of the total weight of the composition. In some embodiments, calcium carbonate is incorporated in amounts between 0.05% and 0.08% of the total weight of the composition. In some embodiments, salt, such as kosher salt or sea salt, is incorporated in amounts between 0.1% and 0.2% of the total weight of the composition. In an exemplary embodiment, magnesium lactate, calcium carbonate and kosher salt are incorporated in amounts of approximately 0.41%, 0.25% and 0.58% of the dry weight of the composition, respectively, or approximately 0.10%, 0.06% and 0.14% of the total weight of the composition, respectively.

Magnesium lactate also functions as an acidity regulator and a fortifier, providing magnesium. Calcium carbonate also functions as a fortifier, providing calcium.

In some embodiments, other monovalent or divalent cation salts may be used in place of or in combination with potassium citrate, kosher salt, magnesium lactate and calcium carbonate. For example, in some embodiments, calcium lactate may be included in place of, or in combination with, calcium carbonate.

Other ingredients and circumstances may affect the capacity for and development of gel structures. Heat will tend to increase activation rates in the system. Certain ingredients can also change the temperature at which gel structures develop.

Polysaccharides and oligosaccharides can affect gelation temperatures. In particular, glucose, fructose and sucrose derivatives can increase the gelling temperatures of gellan gums. By incorporating a glucose or sucrose derivative the gelling temperature of gellan gums is raised, increasing the maximum temperature that the composition can reach before stronger cross-linking takes place. In an exemplary embodiment, isomaltooligosaccharide is provided as a texturizing agent to increase the gelling temperature of the gellan gums. Isomaltooligosaccharide may be sourced as a syrup derived from tapioca, pea, corn or other starchy carbohydrates. Isomaltooligosaccharide may also have the benefit of providing a sensorially inert profile - isomaltooligosaccharide does not tend to impart significant sweetness. Additionally, depending in part on the method of production, some isomaltooligosaccharide molecules may have other benefits including a lower glycemic index and limited calorie contribution.

In some embodiments, isomaltooligosaccharide is incorporated in amounts of between 0.5% and 1% of the total weight of the composition. In some preferred embodiments, isomaltooligosaccharide is incorporated at amounts of between 0.6% and 0.85% of the total weight of the liquid egg analog.

In other embodiments, other poly- and oligo-saccharide molecules in a starch or syrup form made of chains of reducing sugars may be used, alone or in combination with isomaltooligosaccharide, to modify the gelling temperature of the gellan gums.

The incorporation of a poly- and/or -oligo-saccharide molecule may prolong bottle settling and can improve shelf-stability of the liquid egg analog. Conventionally, simple sucrose or glucose may be used to increase the total solids in the liquid mixture and tend to contribute to the formation of a stronger gel. By using poly- and/or -oligo-saccharide molecules, the resulting liquid egg analog may have better liquid properties while still developing suitable gel structures when cooked.

In embodiments of a liquid egg analog, gellan gums including high acyl gellan gum and low acyl gellan gums are incorporated in the composition as hydrocolloids. In some embodiments, other hydrocolloids including starches, gums and seaweed-derivatives may be incorporated in addition to the gellan gums. Gellan gums may be individually added to a recipe in amounts up to 2% of the total dry weight. In some embodiments, gellan gums may be individually added to the total recipe in amounts up to 1% of the total weight.

Low acyl gellan gums may be added in amounts of 0.01% - 1% of the total recipe. While conventional food science recommends high acyl gellan gums be limited to as little as 0.12% of the total composition, in most embodiments high acyl gellan gums are added in amounts of between approximately 0.30% and 0.55% of the total recipe. In some embodiments, high acyl gellan gums may be added in amounts of up to 1% of the total recipe. In some exemplary embodiments, high acyl gellan gums and low acyl gellan gum are incorporated in amounts between 0.45%-0.5% and 0.35%-0.4% of the total weight of the composition, respectively. In a preferred embodiment, high acyl and low acyl gellan gums are added in amounts of approximately 0.48% and 0.39% respectively of the total recipe. In some embodiments, a ratio of high acyl to low acyl gellan gums may be between 1:1 and 1.4:1. A ratio of high acyl to low acyl gellan gums of approximately 1.2:1 has been found to produce desirable characteristics in some preferred embodiments.

In most embodiments, a range of 6 - 8.5% gum in relation to protein is used. Levels significantly below and above this result may lose resemblance to an egg analog.

In some prior art compositions, a combination of gelling agents were used having different behaviors for high temperature and low temperature gelling. In contrast, in some embodiments, high acyl gellan gum and low acyl gellan gum may comprise substantially all of the gelling agents without the addition of a further low-temperature gelling agent or high-temperature gelling agent.

The combination of a suitable quantity of glucose, fructose or sucrose derivative (e.g. isomaltooligosaccharide in amounts stated previously) and gellan gums as primary hydrocolloids in a liquid egg analog may permit the activation temperature of the gellan gums to be raised above temperatures useful or necessary for preparation and pasteurization of a liquid egg substitute. This combination may therefore permit pasteurization without initiating excessive activation of the hydrocolloid while still producing the desired activation and cross-linking when cooking temperatures are reached by the user (e.g. temperatures in excess of approximately 70°C).

Emulsifiers may be used to maintain an emulsion of oil in water. In some embodiments, sunflower lecithin is incorporated as an emulsifier in amounts of up to 1.0% of the total weight of the composition. In some embodiments, sunflower lecithin is used in amounts of between 1.6% and 1.7% of the dry weight of the composition, or approximately 0.4% of the total weight of the composition. In a preferred embodiment sunflower lecithin is used as an emulsifier in amounts of approximately 1.56% of the dry weight of the composition or 0.38% of the total weight of the composition. Other oil-in-water emulsifiers may be used in place of, or in combination with, sunflower lecithin.

Transglutaminase may be added as a texturizing agent. In some embodiments, transglutaminase is incorporated in amounts of up to 0.5% of the total composition. In some exemplary embodiments, transglutaminase is incorporated in amounts between 0.4% and 0.45% of the total weight of the composition. In an exemplary embodiment transglutaminase is incorporated in an amount of approximately 0.42% of the dry weight of the composition or 0.1% of the total weight of the composition. Other additives which might provide a similar function may include classes of enzymes which deaminate and build texture in protein systems.

Other additives may include preservatives, fortifiers, colorants and flavor enhancers. Preservatives may include nisin, botanical extracts, vinegars or acidulants. In some embodiments, natural preservatives are incorporated in an amount of up to 2% of the total weight of the composition. In some further embodiments, natural preservatives are incorporated in amounts of between 1% to 2% of the total weight of the composition. In some embodiments, dried vinegar is incorporated as a natural preservative in amounts of between 0.7% and 1.1% of the total weight of the composition. In a preferred embodiment, dried vinegar is incorporated in an amount of approximately 4.66% of the dry weight of the composition or approximately 1.1% of the total weight of the composition. Preservatives function as shelf-life enhancers of the resulting product.

The incorporation of acidity regulators or acidulants may provide a measure of pH control to the composition. Regulation of the pH of the composition may confer benefits for the hydration and gelation of the proteins. In some embodiments, acidulants and acid regulators are used to maintain the pH of the composition between 4.0 and 7.0. In some preferred embodiments, the pH is maintained between a target of 5.4 and 6.0. Vinegar, used as both an acidulant and natural preservative, may maintain the pH of the composition close to the isoelectric point of the proteins (e.g. a range of between 5.4 and 6.0 pH). The vinegar may be incorporated at the protein hydration stage to improve the receptivity and reactivity of the proteins in subsequent steps. In such embodiments, the inventors have noticed both an improved performance (maintenance of fluidity) prior to cooking and within the cooking process itself (faster and a more bouncy, fluffy egg-like product).

Some fortifiers discussed previously include magnesium lactate, calcium carbonate, and calcium lactate. Other fortifiers may be incorporated according to local regulations. In a preferred embodiment, a vitamin blend defined by Health Canada regulations is incorporated into the liquid egg analog. In some embodiments, the vitamin blend many comprise between 0.5% and 1% of the total weight of the composition.

Colorants are typically incorporated to impart the "egg-yolk" colour of a scrambled egg. Some suitable colorants can include beta carotene, turmeric, carotene, paprika, beets, carrot, pepper, and lycopene. In an exemplary embodiment, a colorant is incorporated in an amount of up to 0.2% of the total weight of the composition. In a preferred embodiment, beta carotene is incorporated in an amount of 0.02% of the total weight of the composition.

Flavour enhancers are ingredients that impart flavours that contribute to the taste profile of the resulting liquid egg analog. Small quantities of dehydrated onion can impart a significant flavour to the resulting liquid egg analog. Other suitable flavour enhancers may include salts, allium ingredients and other natural or artificial flavours that impart a savoury or umami flavour. In some embodiments, flavour enhancers are incorporated in amounts of up to 0.2% of the total weight of the composition. In a preferred embodiment, dehydrated onion is incorporated in an amount of approximately 0.05% of the total weight of the composition.

In some preferred embodiments, the liquid egg analog is prepared without added starches and/or flours. The plant-based proteins may be provided as protein isolates and may have reduced or negligible carbohydrate/starch content. The composition prepared with protein isolates and without significant starches and/or flours may provide improved properties including a desired texture in the cooked product.

Methods of preparation of a liquid egg substitute are also provided. The methods set out here are described with reference to commercial mixing machines having multiple shear levels and/or speeds, e.g. low, medium/moderate, and high shear. Some of the embodiments hereafter described were tested in 120 kg batches in a conventional mixing tank. Different sizes and types of mixing tanks may have different power outputs and different magnitudes of shear for a given speed. For example, a larger tank with a large impeller could produce high shear towards the edges of the tank even at lower relative RPMs. Adjustments should be made according to batch sizes and tank specifications.

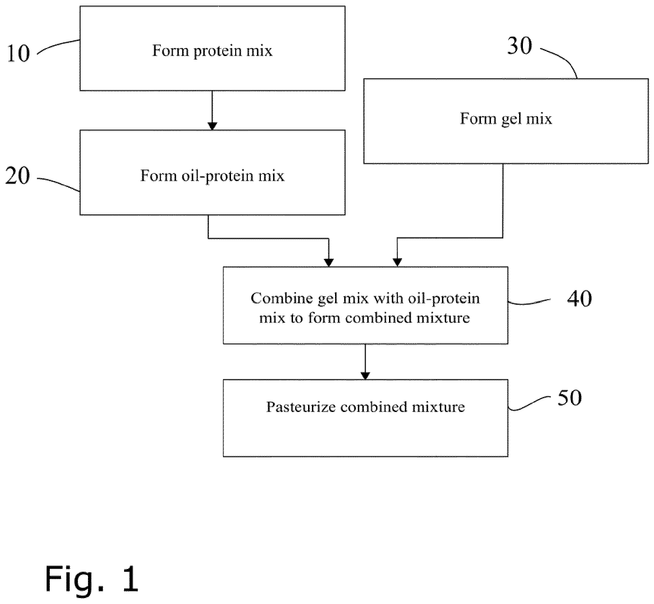

Fig. 1 shows a representation of the preparation process. In step 10, a protein mixture is formed by dosing proteins, a first texturizing agent and an emulsifier into a dispersant. In step 20, an oil-protein mixture is formed by dosing oil into the protein mixture. In step 30, a gel mixture is formed by combining a gel composition comprising high acyl gellan gum and low acyl gellan gum into a dispersant. In step 40, the gel mixture and the oil-protein mixture are combined to form a combined mixture. In step 50, the combined mixture is pasteurized.

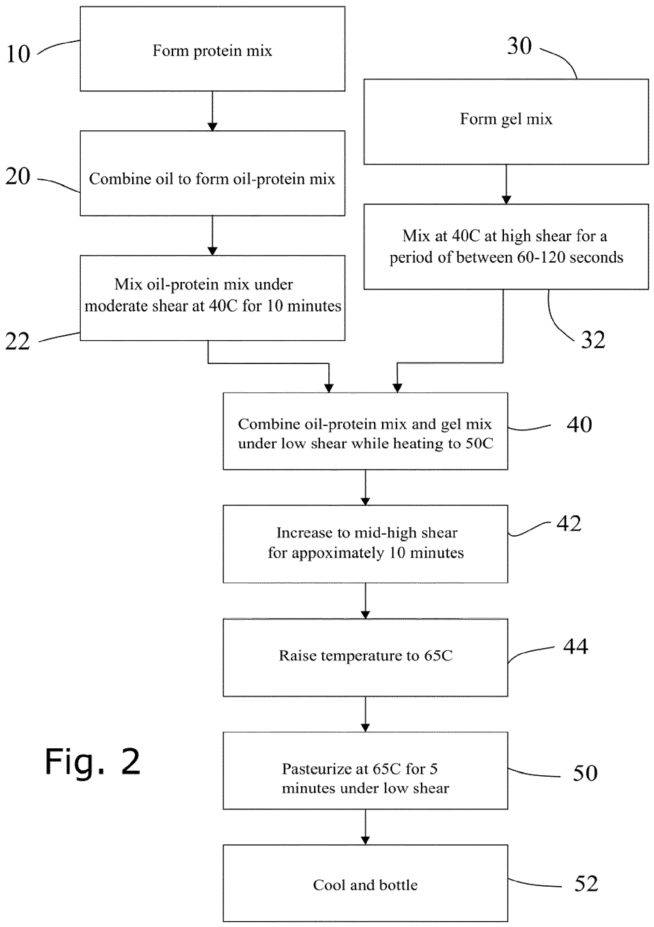

Fig. 2 depicts a further exemplary representation of a method of preparing a liquid egg substitute. In step 10, proteins are mixed together with an emulsifier and texturizing agents to produce a protein mix. A dispersant, typically water, is gradually dosed into the protein mix under slow agitation to ensure that clumps are dispersed. In an exemplary embodiment, approximately half of the water content is mixed with lupin protein, pea protein, emulsifier (sunflower lecithin), TSPP, magnesium lactate and kosher salt.

In step 20, oil and other additives such as texturizing agents are dosed into the wet protein mix. The combined oil-protein mix is then mixed in step 22. Mixing of the combined oil-protein mix may be conducted at a medium speed. In an embodiment, the mixing of the oil-protein mixture is conducted to provide a moderate degree of shear for a duration of approximately 10 minutes and at a temperature of approximately 40°C. Cation salts such as potassium citrate may be mixed into either the wet protein mix or the combined oil-protein mix where reactions may occur between the K+ and the protein structures. The reaction with the protein structures may assist with maintaining a shelf-stable liquid composition by sequestering ions and reducing the availability of the K+ before the addition of the hydrocolloids with which they might produce too strong a gel structure. In an exemplary embodiment, the oil and other additives added to the wet protein mix comprises a combination of a vitamin blend, natural colorant, calcium carbonate and sunflower oil.

In step 30, a gel mix is formed separately from the oil-protein mix. Water is combined with gellants and selected additives to produce the gel mix. In an exemplary embodiment, the gellants and selected additives comprise low acyl and high acyl gellan gums, potassium citrate, transglutaminase and dehydrated onion. The water may be preheated to 40°C and introduced to the separate mixing vessel first. Additives may be added to the water before introduction of the gellants. In a preferred embodiment, an additive introduced to the water before the gellants is isomaltooligosaccharide syrup. The gellants may comprise any of a number of possible gellants. In a preferred embodiment, the gellants comprise a mixture of low acyl gellan gum and high acyl gellan gum. The gellants may also be introduced with other additives such as potassium citrate, transglutaminase, or minimal cation salts,

In step 32, the mixture of gellants and water may be mixed at high shear. High shear mixing may be delayed providing time for powder to settle and to prevent powders from being lifted off of the water. High shear mixing may last for a period of between 60 -120 seconds. Temperature during the mixing may be maintained at around 40°C.

In step 40, the oil-protein mix and the gel mix are combined into a combined mixture. In an embodiment, the gel mix is incorporated into the oil-protein mix under slow stirring, i.e., at low shear. The mixture may be heated to 50°C during the stirring. In some embodiments, other additives, such as fortification agents, vitamins, colour, flavour, preservatives, and salt may be added at this stage. In step 42, the shear may be increased to a mid-high shear level for a period of approximately 10 minutes to disrupt gel structure and to apply a shear thinning process to regulate viscosity. Step 42 may initiate after the combined oil-protein and gel mix has reached 50°C.

A pasteurization step will generally be required for preservation and food safety purposes. Various temperatures and durations may be utilized in pasteurization steps. In a preferred embodiment, a pasteurization step is conducted by first raising the combined mixture to 65°C as step 44. The mixture is then pasteurized in step 50 by mixing at a low shear level for 5 minutes at a sustained 65°C temperature.

Throughout the process of producing a liquid egg analog, the composition may be maintained at or under 55°C, with the exception of the short pasteurization step for 5 minutes at 65°C as well as periods ramping up to and down from the pasteurization temperature. While conventional food science may recommend temperature for gelation of high acyl gellan gum of 70°C, limiting the preparation temperatures and incorporating a suitable poly- or oligo-saccharide to raise the gelation temperature can improve the shelf-stability of the resulting liquid egg analog.

After completion of the pasteurization step, the mixture can be cooled in step 52. Once the mixture reaches 60°C, it is sufficiently cool to be bottled. In some embodiments, the mixture may be cooled to 30°C before bottling. During the cooling process and before bottling, the mixture may be mixed gently (low shear) or at speed (high shear) to keep the product moving and reduce development of gel structures.

The temperatures, speeds, durations, and shear magnitudes set out in this section are exemplary, and small variations may be made to these numbers. For example, in some embodiments, speeds, durations and shear magnitudes may vary from the numbers and degrees described. For example, durations may vary by 5%, 10% or more. Temperatures, shear magnitudes, and speeds may vary similarly. In some embodiments, temperatures of the mixtures are held below 70°C at all times during the preparation process.

By keeping the majority of the divalent ions away from the gellan gums, this may allow the potassium citrate (K+) to start reactivity of the hydrocolloid system. Some of the divalent cations are fortification agents prescribed by Health Canada. Theoretically and traditionally the divalent cations are more reactive and would interact strongly with the hydrocolloids. By placing the divalent cations at the start and end of the process, reactivity may occur with the proteins in the first place. This then means that the gellan gum may bridge more loosely with the K+ before adding the Ca2+/vitamin mix. By adding the ingredients in the manner proposed, the hydrocolloids may have already reacted, allowing the divalent ions to be sequestered by remaining buffers in the system.

Since heat will increase activation rates in a system, the method maintains the composition below the recommended activation temperatures for the hydrocolloids. Furthermore, it is known that shear disrupts viscosity building elements, thus shear is employed to break what might be considered "desirable" gel structures.

The combination of both magnesium and calcium cations can provide an improved texture for the egg analog after cooking. In some tests without magnesium lactate and using other divalent (calcium lactate) cations, the fluidity of the product before cooking was found to be too viscous and thereby not acceptable to a consumer. Removing the magnesium lactate, either completely, or replacing it with monovalent cations (K+, Na+) meant that the cooked texture of the egg analog was too soft, not cohesive or bouncy like a cooked egg would be. To have the divalent cation where they are described - in the protein mixture - may enable the divalent cation to create bridging or crosslinking with the protein in the system, and not to interfere with the hydrocolloids in the system at the later stages of processing.

The resulting product may be liquid, meaning flowing and pourable, at all stages of post-production, which may include several days to months in refrigerated or non-refrigerated conditions. Slight thickening may occur over time; however, the product would remain pourable and pumpable throughout its product life until it is cooked at temperatures higher than 85°C.

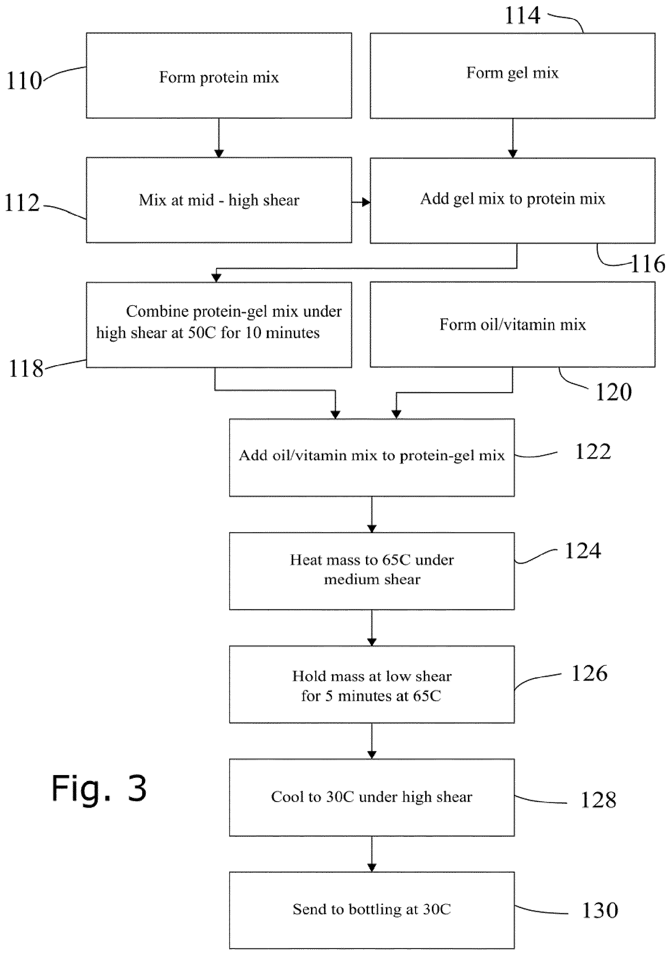

Fig. 3 is a representation of another exemplary method of preparing a liquid egg substitute. In step 110 proteins are mixed together with an emulsifier, acidulant and texturizing agents to produce a protein mix. In step 112, a dispersant, typically water, is dosed at a temperature of approximately 40°C into the protein mix under mid to high shear to ensure that clumps are dispersed.

In step 114 a gel mixture is formed combining gellants with water at approximately 40°C. In step 116, the gel mixture is added to the protein mixture to form a protein-gel mixture. In step 118, the protein-gel mixture is mixed under high shear at approximately 50°C for approximately 10 minutes.

In step 120, oil and other additives such as texturizing agents, fortification agents, vitamins, colour and salt are combined with water at approximately 40°C. In step 122 the oil and other additives are added to the protein-gel mixture to produce a combined mixture.

A pasteurization process begins at step 124. The mass (the combined mixture) is heated to approximately 65°C under medium shear. In step 126, the mass is then held at 65°C at low shear for approximately 5 minutes. In step 128, the mass is then cooled to 30°C under high shear. In step 130, once the mass has cooled to 30°C, it may be sent to bottling.

Two exemplary compositions are set out below, listing the ingredients, their functions and the proportions in which they are incorporated in the liquid egg analog.

**Table 1: First Exemplary Liquid Egg Analog Recipe:**

| **Liquid Egg Analog Ingredient** | **Dry Weight (%)** | **Total Weight (%)** | **Description** |
|---|---|---|---|
| Water | | 76.2 (74 - 78) | Dispersant |
| Lupin Protein | 42.68 (40 - 44) | 10.15 (10 - 12) | Functional protein |
| Sunflower Oil* | 29.02 (27 - 31) | 6.9 (6.5 - 7) | Dispersant |
| Pea Protein | 8.41 (7 - 9) | 2.00 (1.75 - 2.25) | Functional protein |
| Gellan Gum High Acyl | 1.98 (1.5 - 2) | 0.47 (0.45 - 0.5) | Texturizing ingredient: hydrocolloid |
| Gellan Gum Low Acyl | 1.6 (1.5 - 2) | 0.38 (0.35 - 0.4) | |
| Tetrasodium Pyrophosphate | 2.3 (2 - 2.5) | 0.55 (0.5 - 1.0) | Buffer |
| Natural Preservative | 4.6 (4.5 - 5) | 1.1 (0.7 -1.3) | Shelf-life enhancer |
| Isomaltooligosaccharide | 2.73 (2.5 - 3) | 0.65 (0.6 - 0.75) | Texturizing agent: polysaccharide |
| Vitamin Blend | 2.18 (2 - 2.3) | 0.53 (0.5-0.6) | Fortification |
| Sunflower Lecithin | 1.68 (1.5 - 1.7) | 0.38 0.35 - 0.4 | Emulsifier |
| Potassium Citrate | 0.55 (0.4 - 0.6) | 0.13 (0.1 - 0.15) | Buffer/cation salt |
| Kosher Salt | 0.67 0.5 - 0.8 | 0.16 (0.1 - 0.15) | Texturizing agent: cation salt/flavour enhancer |
| Transglutaminase TI Enzyme | 0.42 (0.4 - 0.5) | 0.10 (0.1 - 0.15) | Texturizing agent |
| Magnesium Lactate | 0.42 (0.4-0.5) | 0.10 (0.1 - 0.15) | Texturizing agent: cation salt/ fortification |
| Calcium Carbonate | 0.25 (0.2-0.3) | 0.06 (0.05 - 0.08) | Texturizing agent: cation salt/ fortification |
| Beta Carotene | 0.08 (0.07-0.1) | 0.02 (0.017-0.025) | Colorant |
| Dehydrated Onion | 0.34 (0.3-0.4) | 0.08 (0.05 - 0.1) | Flavour enhancer |

**Table 2: Second Exemplary Liquid Egg Analog Recipe:**

| **Liquid Egg Analog Ingredient** | **Dry Weight (%)** | **Total Weight (%)** | **Description** |
|---|---|---|---|
| Water | | 67.28 | Dispersant |
| Lupin Protein | 28.56 | 5.50 | Functional protein |
| Canola Oil | 37.38 | 7.20 | Dispersant |
| Pea Protein | 18.38 | 3.54 | Functional protein |
| Gellan Gum High Acyl | 1.82 | 0.35 | Texturizing ingredient: hydrocolloid |
| Gellan Gum Low Acyl | 1.51 | 0.35 | |
| Tetrasodium Pyrophosphate | 1.61 | 0.31 | Buffer |
| Isomaltooligosaccharide | 4.31 | 0.83 | Texturizing agent: polysaccharide |
| Vitamin Blend | 0.52 | 0.10 | Fortification |
| Sunflower Lecithin | 2.08 | 0.40 | Emulsifier |
| Potassium Citrate | 1.09 | 0.21 | Buffer/cation salt |
| Kosher Salt | 0.78 | 0.15 | Texturizing agent: cation salt/flavour enhancer |
| Transglutaminase TI Enzyme | 0.47 | 0.09 | Texturizing agent |
| Magnesium Lactate | 0.62 | 0.12 | Texturizing agent: cation salt/ fortification |
| Calcium Lactate | 0.52 | 0.10 | Texturizing agent: cation salt/ fortification |
| Natural Colour | 0.16 | 0.03 | Colorant |
| Dehydrated Onion | 0.21 | 0.04 | Flavour enhancer |

As discussed in the preceding description, the percentages of dry weight and total weight of each of the components of the composition may be varied slightly without significantly impacting the properties of the composition including the taste, texture, or emulsifying or thickening properties. In some embodiments, each of the percentages of the dry weight or total weight of each of these components may be varied within ranges that depend upon the impact of that ingredient upon the recipe. Some ingredients have moderately tight constraints in which they produce desirable outcomes. For example, high acyl gellan gum, low acyl gellan gum and tetrasodium pyrophosphate may be best maintained in proportions below 1% of the total weight of the composition for best results. Sets of potential ranges are incorporated in Table 1 in parentheses. These ranges illustrate some of the potential scope for variation of ingredient in exemplary compositions.

In the claims, the word "comprising" is used in its inclusive sense and does not exclude other elements being present. The indefinite articles "a" and "an" before a claim feature do not exclude more than one of the feature being present. Each one of the individual features described here may be used in one or more embodiments and is not, by virtue only of being described here, to be construed as essential to all embodiments as defined by the claims.

Further aspects and features of the present invention are set out in the following numbered clauses:
1. A liquid egg analog comprising:
   a dispersant;
   an emulsifier;
   a plant protein;
   high acyl gellan gum;
   low acyl gellan gum;
   texturizing agents; and
   a glucose, fructose or sucrose derivative.
2. The liquid analog of clause 1, comprising an acidulant.
3. The liquid egg analog according to any one of clauses 1 or 2, wherein the plant protein comprises lupin protein.
4. The liquid egg analog according to any one of clauses 1-2, wherein the plant protein comprises pea protein.
5. The liquid egg analog according to any one of clauses 1-4, wherein the glucose, fructose or sucrose derivative comprises isomaltooligosaccharide.
6. The liquid egg analog according to any one of clauses 1-5, comprising transglutaminase.
7. The liquid egg analog according to any one of clauses 1-6, comprising a sodium phosphate or a potassium phosphate.
8. The liquid egg analog according to clause 7, wherein the sodium phosphate or potassium phosphate is selected from the group consisting of tetrasodium pyrophosphate (TSPP), disodium phosphate (DSP) and sodium hexametaphosphate (SHMP).
9. The liquid egg analog according to any one of clauses 1-8, wherein the texturizing agents comprise one or more divalent cation salts.
10. The liquid egg analog according to clause 9 wherein the one or more divalent cation salts comprise a magnesium salt.
11. The liquid egg analog according to clause 10 wherein the magnesium salt comprises magnesium lactate.
12. The liquid egg analog according to any one of clauses 9-11 wherein the one or more divalent cation salts comprise a calcium salt.
13. A liquid egg analog comprising:
   a dispersant;
   an emulsifier;
   lupin protein extract;
   pea protein extract;
   high acyl gellan gum;
   low acyl gellan gum; and
   texturizing agents.
14. The liquid egg analog of clause 13 in which the lupin protein extract and the pea protein extract together comprise between 10% and 15% of a total weight of the liquid egg analog.
15. The liquid egg analog according to any one of clause 13 or 14 in which the lupin protein extract and the pea protein extract together comprise more than 95% of a protein content of the liquid egg analog by total weight.
16. The liquid egg analog according to any one of clauses 13-15 in which a ratio of combined weight of high acyl gellan gum and low acyl gellan gum to combined weight of lupin protein extract and pea protein extract is between 0.06 and 0.085.
17. A plant-based egg substitute comprising:
   an emulsifier;
   lupin protein extract;
   pea protein extract;
   high acyl gellan gum;
   low acyl gellan gum; and
   texturizing agents.
18. A method of preparing a liquid egg analog, the method comprising:
   forming a protein mixture by dosing proteins, a first texturizing agent and an emulsifier into a dispersant;
   forming a gel mixture by combining a gel composition comprising high acyl gellan gum and low acyl gellan gum into a dispersant;
   combining the gel mixture with the protein mixture to form a combined mixture; and
   pasteurizing the combined mixture.
19. The method according to clause 18 wherein pasteurizing the combined mixture occurs at a temperature less than or equal to 65°C for a period of less than 10 minutes while agitating the mixture under low shear.
20. The method according to any one of clauses 18-19 wherein the steps of forming a protein mixture, forming a gel mixture, and combining the gel mixture with the protein mixture all occur at temperatures less than or equal to 55°C.
21. The method according to any one of clauses 18-20 wherein the first texturizing agent comprises a divalent cation salt.
22. The method according to any one of clauses 18-21 comprising dosing oil and fortifiers into the combined mixture.
23. The method according to any one of clauses 18-22 wherein dosing a gel composition comprising high acyl gellan gum and low acyl gellan gum into a dispersant to form a gel mixture comprises dosing a glucose, fructose or sucrose derivative into the dispersant.
24. The method according to clause 23 wherein the glucose, fructose or sucrose derivative comprises isomaltooligosaccharide.

## Claims

1. A liquid egg analog comprising:
a dispersant;
an emulsifier;
a plant protein;
high acyl gellan gum;
low acyl gellan gum;
texturizing agents; and
a glucose, fructose or sucrose derivative.

2. The liquid analog of claim 1, comprising:
a) an acidulant; and/or
b) transglutaminase; and/or
c) a sodium phosphate or a potassium phosphate; optionally wherein the sodium phosphate or potassium phosphate is selected from the group consisting of tetrasodium pyrophosphate (TSPP), disodium phosphate (DSP) and sodium hexametaphosphate (SHMP).

3. The liquid egg analog according to claim 1 or claim 2, wherein the plant protein comprises:
a) lupin protein; or
b) pea protein.

4. The liquid egg analog according to any one of claims 1 to 3, wherein the glucose, fructose or sucrose derivative comprises isomaltooligosaccharide

5. The liquid egg analog according to any one of claims 1 to 4, wherein the texturizing agents comprise one or more divalent cation salts;
optionally, wherein the one or more divalent cation salts comprise a magnesium salt; optionally, wherein the magnesium salt comprises magnesium lactate.
optionally, wherein the one or more divalent cation salts comprise a calcium salt.

6. A liquid egg analog comprising:
a dispersant;
an emulsifier;
lupin protein extract;
pea protein extract;
high acyl gellan gum;
low acyl gellan gum; and
texturizing agents.

7. The liquid egg analog of claim 6 in which the lupin protein extract and the pea protein extract together comprise:
a) between 10% and 15% of a total weight of the liquid egg analog; and/or
b) more than 95% of a protein content of the liquid egg analog by total weight.

8. The liquid egg analog according to claim 6 or claim 7 in which a ratio of combined weight of high acyl gellan gum and low acyl gellan gum to combined weight of lupin protein extract and pea protein extract is between 0.06 and 0.085.

9. A plant-based egg substitute comprising:
an emulsifier;
lupin protein extract;
pea protein extract;
high acyl gellan gum;
low acyl gellan gum; and
texturizing agents.

10. A method of preparing a liquid egg analog, the method comprising:
forming a protein mixture by dosing proteins, a first texturizing agent and an emulsifier into a dispersant;
forming a gel mixture by combining a gel composition comprising high acyl gellan gum and low acyl gellan gum into a dispersant;
combining the gel mixture with the protein mixture to form a combined mixture; and
pasteurizing the combined mixture.

11. The method according to claim 10 wherein pasteurizing the combined mixture occurs at a temperature less than or equal to 65°C for a period of less than 10 minutes while agitating the mixture under low shear.

12. The method according to claim 10 or claim 11 wherein the steps of forming a protein mixture, forming a gel mixture, and combining the gel mixture with the protein mixture all occur at temperatures less than or equal to 55°C.

13. The method according to any one of claims 10 to 12 wherein the first texturizing agent comprises a divalent cation salt.

14. The method according to any one of claims 10 to 13 comprising dosing oil and fortifiers into the combined mixture.

15. The method according to any one of claims 10 to 14 wherein dosing a gel composition comprising high acyl gellan gum and low acyl gellan gum into a dispersant to form a gel mixture comprises dosing a glucose, fructose or sucrose derivative into the dispersant; optionally, wherein the glucose, fructose or sucrose derivative comprises isomaltooligosaccharide.
